(19) Europäisches Patentamt
European Patent Office
Office européen des brevets

(11) EP 1 236 734 A1

(12) # EUROPÄISCHE PATENTANMELDUNG

(43) Veröffentlichungstag:
**04.09.2002 Patentblatt 2002/36**

(51) Int Cl.[7]: **C07F 9/535**, C25B 3/08

(21) Anmeldenummer: **02002734.8**

(22) Anmeldetag: **07.02.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.02.2001 DE 10109756**

(71) Anmelder: **MERCK PATENT GmbH**
**64293 Darmstadt (DE)**

(72) Erfinder:
- **Schmidt, Michael, Dr.**
  **64342 Seeheim-Jugenheim (DE)**
- **Kühner, Andreas, Dr.**
  **64289 Darmstadt (DE)**
- **Ignatyev, Nikolai, Dr.**
  **47058 Duisburg (DE)**
- **Sartori, Peter, Prof.**
  **86919 Utting (DE)**

(54) **Fluoro-alpha,omega-bis (Fluoralkyl/Fluorphosphorano)alkane und Verfahren zu ihrer Herstellung**

(57) Die vorliegende Erfindung betrifft Fluoro-$\alpha$,$\omega$-bis [(fluoralkyl)fluorphosphorano)]alkane sowie Verfahren zu ihrer Herstellung und ihre Verwendung als Zwischenprodukt.

EP 1 236 734 A1

## Beschreibung

Die vorliegende Erfindung betrifft Fluoro-$\alpha,\omega$-bis [(fluoralkyl)fluorphosphorano)]alkane sowie Verfahren zu ihrer Herstellung und ihre Verwendung als Zwischenprodukt.

Perfluoroalkylfluorophosphorane sind nützliche Ausgangsmaterialien für die Synthese diverser fluorierter organischer Phosphorverbindungen, die eine ganze Reihe praktischer Anwendungen haben [P. Sartori und N. Ignatyev, WO 98/15562 (Merck KGaA); V.Ya. Semenii, V.N. Zavatchskii, N.I. Liptuga und L.M. Yagupolskii, USSR Patent Nr. 498311 (1976); N.V. Pavlenko, V.N. Zavatchskii, V.Ya. Semenii, G.I. Matyuschecheva und L.M. Yagupolskii, Zh. Obshch. Chim. (Russ.), 59 (1989), S. 534-537; N.V. Pavlenko und L.M. Yagupolskii, Zh. Obshch. Chim. (Russ.), 59 (1989), S. 528-534].

Fluoro-$\alpha,\omega$-bis [(fluoralkyl)fluorphosphorano)]alkane weisen 2 Phosphorreaktionszentren auf, die somit zusätzliche Möglichkeiten ihrer Anwendung als Liganden in der metallorganischen Chemie bieten. Verfahren zur Herstellung solcher Fluoro-$\alpha,\omega$-bis [(fluoralkyl)fluorphosphorano)]alkane, insbesondere in kommerziell sinnvollen Mengen stehen derzeit nicht zur Verfügung.

Vor kurzem wurde eine Methode zur elektrochemischen Fluorierung von Alkylphosphanen oder Phosphoranen (A) mit variabler Anzahl von Phosphorgebundenen Alkylradikalen entwickelt [U. Heider, V. Hilarius, P. Sartori und N. Ignatyev, DE 198 46 636 A1 (1998) (Merck KGaA)]. Diese Methode erlaubt die Synthese von Perfluoroalkylphosphoranen (B) unterschiedlicher Struktur in hohen Ausbeuten.

$$(C_nH_{2n+1})_yPX_{z-y} \quad \rightarrow \quad (C_nF_{2n+1})_yPF_{5-y}$$

(A) (B)

worin X = H, Cl, F; Y = 1 - 3; Z = 3 (X = H, Cl, F) oder z = 5 (X = Cl, F); und $n \geq 1$

Die Anwendungsmöglichkeit dieser Methode auf die Synthese von Fluoro-$\alpha,\omega$-bis [(fluoralkyl)fluor-phosphorano)]alkanen war für den Fachmann nicht zu erwarten, da die zum 1,2-Bis(diethylphospino)ethan nächstliegende analoge elektrochemische Fluorierung von N, N, N', N'-Tetramethylendiamin mit einer starken Zersetzungsreaktion des Edukts einhergeht und eine komplexe Mischung perfluorierter und teilfluorierter Verbindungen entsteht [P. Sartori, D. Velayutham, N. Ignatyev und M. Noel, J.Fluorine Chem., 83 (1997), S. 1-8].

Es war daher die Aufgabe der vorliegenden Erfindung, Fluoro-$\alpha,\omega$-bis [(fluoralkyl)fluorphosphorano)]alkane zur Verfügung zu stellen.

Diese Aufgabe wird durch die Bereitstellung von Fluoro-$\alpha,\omega$-bis [(fluoralkyl)fluorphosphorano)]alkanen der allgemeinen Formel (I) gelöst,

$$(C_nF_{2n+1-m}H_m)_yPF_{4-y}(CR_1R_2)_xPF_{4-y}(C_nF_{2n+1-m}H_m)_y$$

(I)

worin

$$1 \leq n \leq 8,$$

$$0 \leq m \leq 2 \text{ für } n=1 \text{ oder } 2,$$

$$0 \leq m \leq 4 \text{ für } 3 \leq n \leq 8,$$

$$1 \leq x \leq 12,$$

$0 \leq y \leq 2$ und,

wobei $R_1$ und $R_2$ identisch oder unterschiedlich sind und ausgewählt sind aus der Gruppe der Fluor-, Wasserstoff- und der Alkyl-, Fluoralkyl und Perfluoralkylsubstituenten und, wobei jeweils die Substituenten $(C_nF_{2n+1-m}H_m)_y$ und/oder jeweils die Anzahl dieser Substituenten an den Phosphorzentren $PF_{4-y}$ identisch oder unterschiedlich sind und die Verbindung Perfluoro-1,2-bis(diethyldifluorophosphorano)ethan ausgenommen ist.

Bevorzugt sind erfindungsgemäße Fluoro-α,ω-bis [(fluoralkyl)fluorphosphorano)]alkane der allgemeinen Formel (I), in denen $1 \leq n \leq 6$, vorzugsweise $1 \leq n \leq 3$ ist.

Des weiteren sind auch Fluoro-α,ω-bis [(fluoralkyl)fluorphosphorano)]alkane der allgemeinen Formel (I) bevorzugt, in denen $1 \leq x \leq 8$, vorzugsweise $1 \leq x \leq 4$ ist.

Besonders bevorzugt sind die Fluoro-α,ω-bis [(fluoralkyl)fluorphosphorano)]-alkane der allgemeinen Formel (I), in denen m = 0 ist.

Besonders bevorzugt sind auch Fluoro-α,ω-bis [(fluoralkyl)fluorphosphorano)]-alkane der allgemeinen Formel (I), in denen y = 2 ist.

Ganz besonders bevorzugt sind die erfindungsgemäßen Fluoro-α,ω-bis [(fluoralkyl)fluorphosphorano)]alkane der allgemeinen Formel (I), in denen $R_1$ und $R_2$ Fluoratome sind.

Ganz besonders bevorzugt sind die erfindungsgemäßen Fluoro-α,ω-bis [(fluoralkyl)fluorphosphorano)]alkane der allgemeinen Formel (I), in denen $R_1$ und $R_2$ Fluoratome sind und m = 0 ist.

Ein weiterer Gegenstand der vorliegenden Erfindung betrifft auch ein Verfahren zur Herstellung der erfindungsgemäßen Fluoro-α,ω-bis [(fluoralkyl)fluorphosphorano)]alkane der allgemeinen Formel (I).

Es wurde überraschenderweise gefunden, daß Fluoro-α,ω-bis [(fluoralkyl)-fluorphosphorano)]alkane aus α, ω-Bis(alkylphosphino)alkanen durch Elektrolyse in Fluorwasserstoff in guter Ausbeute zugänglich sind.

Der Vorteil des erfindungsgemäßen Vefahrens liegt in der Verwendung unkomplizierter Technologie sowie des Verzichts auf teure Hilfsmittel wie Helium und fluorierte Lösungsmittel. Zudem kann das erfindungsgemäße Verfahren mit ausreichenden Mengen Ausgangsmaterial ausgeführt werden und erlaubt neben einer genauen Produktanalyse auch die kommerzielle Nutzung.

Bevorzugt ist ein Verfahren zur Herstellung von Fluoro-α,ω-bis [(fluoralkyl)fluorphosphorano)]alkanen der allgemeinen Formel (I)

$$(C_nF_{2n+1-m}H_m)_yPF_{4-y}(CR_1R_2)_xPF_{4-y}(C_nF_{2n+1-m}H_m)_y$$

(I)

worin $1 < n \leq 8$, $0 \leq m \leq 2$ für n=1 oder 2, $0 \leq m \leq 4$ für $3 \leq n \leq 8$, $1 \leq x \leq 12$, $0 \leq y \leq 2$ und, wobei $R_1$ und $R_2$ identisch oder unterschiedlich sind und ausgewählt sind aus der Gruppe Fluor, Wasserstoff und der Alkyl-, Fluoralkyl und Perfluoralkylsubstituenten und, wobei jeweils die Substituenten $(C_nF_{2n+1-m}H_m)_y$ und/oder jeweils die Anzahl dieser Substituenten an den Phosphorzentren $PF_{4-y}$ identisch oder unterschiedlich sind, wobei wenigstens ein α,ω-Bis(alkylphosphino)alkan oder α,ω-Bis[(alkyl)halogenphosphorano]alkane durch Elektrolyse in Fluorwasserstoff zu wenigstens einer Verbindung der allgemeinen Formel (I) umgesetzt und diese gegebenenfalls gereinigt und/oder isoliert wird.

Besonders bevorzugt ist eine besondere Ausführungsvariante des erfindungsgemäßen Verfahrens, bei dem wenigstens eine Verbindung der allgemeinen Formel (II),

$$(C_aH_{2a+1})_bP(R^1)_{2-b}(CH_2)_cP(R^1)_{2-b}(C_aH_{2a+1})_b$$

(II)

worin $R^1$ = H, Cl oder F, $1 \leq a \leq 8$, b = 0, 1 oder 2 und $1 \leq c \leq 12$ sind, und/oder wenigstens eine Verbindung der allgemeinen Formel (III),

$$(C_aH_{2a+1})_bP(R^2)_{4-b}(CH_2)_cP(R^2)_{4-b}(C_aH_{2a+1})_b$$

(III)

worin $R^2$ = Cl oder F, $1 \leq a \leq 8$, b = 0, 1 oder 2 und $1 \leq c \leq 12$ sind, wobei jeweils die Liganden ($C_aH_{2a+1}$), $R^1$ und $R^2$ der Verbindungen (II) und/oder (III) identisch oder unterschiedlich sind, durch Elektrolyse in Fluorwasserstoff zu einer Verbindung der allgemeinen Formel (I) umgesetzt und diese gegebenenfalls gereinigt und/oder isoliert wird.

Bei den erfindungsgemäßen Verfahren erfolgt die Elektrolyse bevorzugt bei einer Temperatur von -20 bis +40 °C, besonders bevorzugt bei -10 bis +10 °C und ganz besonders bevorzugt bei -5 bis +5 °C.

Die erfindungsgemäße Elektrolyse kann in jeder beliebigen dem Fachmann bekannten Zelle durchgeführt werden. Solche Elektrolysezellen können auch bei Überdruck betrieben werden.

Die Elektrolyse von $\alpha$, $\omega$-Bis(alkylphosphino)alkanen wird bevorzugt bei einem Überdruck (Druck über Normaldruck) von 0 bis 3 bar, besonders bevorzugt von 0,1 bis 1,5 bar und ganz besonders bevorzugt bei Normaldruck durchgeführt.

Die erfindungsgemäßen Elektrolyseverfahren werden bevorzugt bei einer Spannung von 4 bis 8 Volt, vorzugsweise bei 4,5 - 7,5 Volt durchgeführt.

Die erfindungsgemäßen Elektrolyseverfahren werden bevorzugt bei einer Stromdichte von 0,2 bis 5 $A/dm^2$, besonders bevorzugt bei 0,2 bis 4 $A/dm^2$, ganz besonders bevorzugt bei 0,5 bis 2,5 $A/dm^2$ durchgeführt.

Zur Aufreinigung und/oder Isolierung der Verbindungen der allgemeinen Formel (I) eignen sich vorzugsweise die Extraktion, Phasentrennung, Destillation oder eine Kombination dieser Methoden.

Bevorzugt sind erfindungsgemäße Verfahren, bei denen zur Elektrolyse eine Anode eingesetzt wird, die auf Nickel basiert. Die Kathode ist frei wählbar. Sie kann beispielsweise aus Nickel oder auch aus Stahl sein.

Im Gegensatz zu den bisher bekannten Perfluoralkylphosphoranen weisen die erfindungsgemäßen Fluoro-$\alpha$,$\omega$-bis [(fluoralkyl)fluorphosphorano)]alkane der allgemeinen Formel (I) zwei Phosphorreaktionszentren auf. Diese neuen Verbindungen bieten daher die Möglichkeit neue metallorganische Liganden herzustellen.

Ein weiterer Aspekt der vorliegenden Erfindung betrifft daher Verbindungen die unter Verwendung von wenigstens einer Verbindung der allgemeinen Formel (I) als Zwischenprodukt erhalten werden.

Die erfindungsgemäßen Fluoro-$\alpha$,$\omega$-bis[(fluoralkyl)fluorphosphorano)]alkane der allgemeinen Formel (I) können als Ausgangsmaterialien für die Herstellung von Salzen mit ein- bis dreiwertigen Kationen, z.B. Lithium- oder Tetraalkylammoniumsalzen, verwendet werden. Diese Salze und ihre Mischungen sind für den Einsatz in elektrochemischen Zellen, primären und sekundären Lithium-Ionen-batterien, Kondensatoren und Superkondensatoren geeignet. Sie können als Leitsalze oder Additive eingesetzt werden. Ebenso können sie in Anteilen zwischen 1 und 99% in Kombination mit anderen Leitsalzen, die in elektrochemischen Zellen Anwendung finden, verwendet werden. Geeignet sind z.B. Leitsalze ausgewählt aus der Gruppe $LiPF_6$, $LiBF_4$, $LiClO_4$, $LiAsF_6$, $LiCF_3SO_3$, $LiN(CF_3SO_2)_2$, $LiN(CF_3CF_2SO_2)_2$ oder $LiC(CF_3SO_2)_3$ und deren Mischungen.

Im folgenden wird die Erfindung anhand von Beispielen erläutert. Diese Beispiele dienen lediglich der Erläuterung der Erfindung und schränken den allgemeinen Erfindungsgedanken nicht ein.

**Beispiele**

Beispiel 1:

Synthese von Perfluor-1,2-bis[(diethyl)difluorphosphorano)ethan

$$(C_2F_5)_2PF_2\text{-}CF_2\text{-}CF_2\text{-}F_2P(C_2F_5)_2$$

Diese Verbindung wurde über das Simons-Verfahren durch die elektrochemische Fluorierung von 1,2-Bis (diethylphosphino)ethan in einer elektrochemischen Zelle mit Fluorwasserstoff als Lösungsmittel hergestellt. Es wurde eine zylindrische Edelstahlzelle mit einem Gesamtvolumen von 310 ml und einem Paar Nickel-Anoden (mit einer effektiven Anodenfläche von 3,75 $dm^2$) und -Kathoden mit der selben effektiven Fläche verwendet. Die Zelle war zum Zweck der Kondensierung des Fluorwasserstoffdampfes mit einem Kühler ausgestattet. Die Temperatur der Zelle wurde auf 0°C und die Temperatur des Kühlers auf -30°C eingestellt.

38,5 g einer 25,3 %igen Lösung von 1,2-Ethandiylbis(diethylphosphin) in Fluorwasserstoff wurde in zwei Portionen (26,0 g am Anfang, 12,5 g nach 31,7 Ah) auf 235 g flüssigen Fluorwasserstoff gegeben, der zuvor 19 Stunden in der Zelle vorelektrolysiert worden war. Die gasförmigen Produkte aus der Zelle wurden durch den Kühler und durch eine FEP-Falle (FEP, Tetrafluorethylen-Hexafluorpropylen-Copolymer) bei -78°C geleitet. Die eigentliche Elektrolyse fand bei einer Spannung von 4,8 bis 5,3 Volt (Zellspannung) und einer Stromdichte von 0,24 bis 0,53 $A/dm^2$ statt und war

nach einem Verbrauch von 104 Ah Strom abgeschlossen (154 % des Theoriewerts). Nach Beendigung der Elektrolyse wurde die flüssige Phase aus der Zelle über einen Abscheider entfernt und das perfluorierte Produkt vom Boden entnommen. Insgesamt betrug die Zellausbeute 13 g einer transparenten Flüssigkeit, die gemäß NMR $^{19}F$ und $^{31}P$ Spektren ca. 60 mol% Perfluoro-1,2-bis(diethyldifluorophosphorano)ethan und ca. 40 mol% Tris(pentafluorethyl)difluorophosphoran enthielt. Die Ausbeute an Perfluoro-1,2-bis(diethyldifluoro-phosphorano)ethan betrug 23 %. Durch fraktionierte Destillation konnten diese Substanzen als reine Produkte isoliert werden, die durch NMR $^{19}F$ und $^{31}P$ Spektren charakterisiert wurden. Es wurde hierzu die Flüssigkeit in einer FEP-Röhre ohne Lösungsmittel unter Verwendung einer speziellen Technik ($CD_3COCD_3$ Film) gemessen. $CCl_3F$ diente als externe Referenz in dem Film. Die Frequenz von 566,22 Hz von 85 % $H_3PO_4$ in Wasser als Referenz mit Aceton-$D_6$-Film wurde separat experimentell bestimmt. Beide NMR $^{19}F$ und $^{31}P$ Spektren wurden mit einem Bruker DRX 500 Spektrometer (470,6 MHz für $^{19}F$ und 202,5 MHz für $^{31}P$) gemessen.

NMR $^{19}F$: -48,72 dm (4 F, 2 $PF_2$); -83,46 tm (12 F, 4 $CF_3$); -107,73 dm (4 F, 2 $CF_2$);
-114.61 dm (8 F, 4 $CF_2$);
$J^1_{P,F}$ = 1016 Hz; $J^2_{P,F}$ = 122,0 Hz:
$J^2_{P,F}$ = 120,4 Hz; $J^4_{F,F}$ = 9,6 Hz
NMR $^{31}P$: -46,30 tm; $J^3_{P,P}$ = 44,6 Hz

Beispiel 2:

Synthese von Perfluoro-1,2-bis[di(i-butyl)difluorophosphorano]ethan

$$(i\text{-}C_4F_9)_2PF_2\text{-}CF_2\text{-}CF_2\text{-}F_2P(C_4F_9)_2$$

Diese Verbindung wurde über das Simons-Verfahren durch die elektrochemische Fluorierung von 1,2-Bis [di-(i-butyl)phosphino]ethan in einer elektrochemischen Zelle mit Fluorwasserstoff als Lösungsmittel hergestellt. Es wurde eine zylindrische Edelstahlzelle mit einem Gesamtvolumen von 360 ml und einem Paar Nickel-Anoden (mit einer effektiven Anodenfläche von 4,85 $dm^2$) und -Kathoden mit der gleichen effektiven Fläche verwendet. Die Zelle war zum Zweck der Kondensierung des Fluorwasserstoffdampfes mit einem Kühler ausgestattet. Die Temperatur der Zelle wurde auf 0°C und die Temperatur des Kühlers auf -30°C eingestellt.
135 g einer 46.2 %igen Lösung von 1,2-bis[di-(i-butyl)phosphino]ethan in Fluorwasserstoff wurde in sechs Portionen (31,0 g am Anfang, 15,0 g nach 38,9 Ah, 26,0 g nach 85,7 Ah, 24,0 g nach 143,0 Ah, 26,0 g nach 185,5 Ah, 13,0 g nach 234,3 Ah) auf 335 g flüssigen Fluorwasserstoff gegeben, der zuvor 28 Stunden in der Zelle vorelektrolysiert worden war. Die gasförmigen Produkte aus der Zelle wurden bei -78°C durch den Kühler in eine FEP-Falle geleitet. Die Elektrolysereaktion fand bei einer Spannung von 4,4 bis 5,3 Volt (Zellspannung) und einer Stromdichte von 0,44 bis 0,55 A/$dm^2$ statt und war nach dem Verbrauch von 431,3 Ah Strom abgeschlossen (102,3 % des Theoriewerts). Nach Beendigung der Elektrolyse wurde die flüssige Phase aus der Zelle über einen Abscheider entfernt und das perfluorierte Produkt vom Boden entnommen. Insgesamt betrug die Ausbeute 136 g einer transparenten Flüssigkeit, die gemäß NMR 19F- und $^{31}P$-Spektren Perfluoro-1,2-bis[(di-(ibutyl)difluorophosphorano]ethan und ein Isomerengemisch aus Perfluoro-1,2-bis[dibutyl)difluorophosphorano]ethanen mit Nonafluoro-i-butyl- und Nonafluoro-n-butyl-Radikalen in unterschiedlichen Positionen des Diphosphoranoethans enthielt sowie etwa 20 % teilfluorierter Verbindungen. Die Ausbeute an Perfluoro-1,2-bis[di-(i-Butyl)difluorophosphorano]ethan betrug twischen 10 und 15 %.
Durch fraktionierte Destillation konnte Perfluoro-1,2-bis[di-(i-butyl)difluorophosphorano]ethan als Hauptprodukt isoliert werden, das durch NMR $^{19}F$ und $^{31}P$ Spektren charakterisiert wurde.
Es wurde hierzu die Flüssigkeit in einer FEP-Röhre ohne Lösungsmittel unter Verwendung einer speziellen Technik ($CD_3COCD_3$ Film) gemessen. $CCl_3F$ diente als externe Referenz in dem Film. Die Frequenz von 566,22 Hz von 85 % $H_3PO_4$ in Wasser als Referenz mit Aceton-$d_6$-Film wurde separat experimentell bestimmt. Beide NMR $^{19}F$ und $^{31}P$ Spektren wurden mit einem Bruker DRX 500 Spektrometer (470,6 MHz für $^{19}F$ und 202,5 MHz für $^{31}P$) gemessen.

NMR $^{19}F$: -48,88 dm (4 F, 2 $PF_2$); -74,12 m (24 F, 8 $CF_3$); -100,52 dm (8 F, 4 $CF_2$):
-107.01 dm (4 F, 2 $CF_2$); -180,75 m (4 F, 4 CF);
$J^1_{P,F}$ = 1035 Hz; $J^2_{P,F}$ = 121,0 Hz:
NMR $^{31}P$: -40,5 tm

## Patentansprüche

1. Fluoro-α,ω-bis [(fluoralkyl)fluorphosphorano)]alkane der allgemeinen Formel (I),

$$(C_nF_{2n+1-m}H_m)_yPF_{4-y}(CR_1R_2)_xPF_{4-y}(C_nF_{2n+1-m}H_m)_y$$

(I)

worin

$$1 \le n \le 8,$$

$$0 \le m \le 2 \text{ für } n=1 \text{ oder } 2,$$

$$0 \le m \le 4 \text{ für } 3 \le n \le 8,$$

$$1 \le x \le 12,$$

$$0 \le y \le 2 \text{ und.}$$

wobei $R_1$ und $R_2$ identisch oder unterschiedlich sind und ausgewählt sind aus der Gruppe der Fluor-, Wasserstoff- und der Alkyl-, Fluoralkyl- und Perfluoralkylsubstituenten und,
wobei jeweils die Substituenten $(C_nF_{2n+1-m}H_m)_y$ und/oder jeweils die Anzahl dieser Substituenten an den Phosphorzentren $PF_{4-y}$ identisch oder unterschiedlich sind und
die Verbindung Perfluoro-1,2-bis(diethyldifluorophosphorano)ethan ausgenommen ist.

**2.** Fluoro-α,ω-bis [(fluoralkyl)fluorphosphorano)]alkane gemäß Anspruch 1, **dadurch gekennzeichnet, daß** $1 \le n \le 6$, vorzugsweise $1 \le n \le 3$ ist.

**3.** Fluoro-α,ω-bis [(fluoralkyl)fluorphosphorano)]alkane gemäß Anspruch 1 oder 2, **dadurch gekennzeichnet, daß** $1 \le x \le 8$, vorzugsweise $1 \le x \le 4$ ist.

**4.** Fluoro-α,ω-bis [(fluoralkyl)fluorphosphorano)]alkane gemäß einem der Ansprüche 1 bis 3, **dadurch gekennzeichnet, daß** m = 0 ist.

**5.** Fluoro-α,ω-bis [(fluoralkyl)fluorphosphorano)]alkane gemäß einem der Ansprüche 1 bis 4, **dadurch gekennzeichnet, daß** y = 2 ist.

**6.** Fluoro-α,ω-bis [(fluoralkyl)fluorphosphorano)]alkane gemäß einem der Ansprüche 1 bis 5, **dadurch gekennzeichnet, daß** $R_1$ und $R_2$ Fluoratome sind.

**7.** Verfahren zur Herstellung von Fluoro-α,ω-bis [(fluoralkyl)fluorphosphorano)]alkanen der allgemeinen Formel (I)

$$(C_nF_{2n+1-m}H_m)_yPF_{4-y}(CR_1R_2)_xPF_{4-y}(C_nF_{2n+1-m}H_m)_y$$

(I)

worin $1 \le n \le 8.0 \le m \le 2$ für n=1 oder $2{,}0 \le m \le 4$ für $3 \le n \le 8{,}1 \le x \le 12$,

$$0 \le y \le 2 \text{ und,}$$

wobei $R_1$ und $R_2$ identisch oder unterschiedlich sind und ausgewählt sind aus der Gruppe der Fluor-, Wasserstoff- und der Alkyl-, Fluoralkyl und Perfluoralkylsubstituenten und,
wobei jeweils die Substituenten $(C_nF_{2n+1-m}H_m)_y$ und/oder jeweils die Anzahl dieser Substituenten an den Phosphorzentren $PF_{4-y}$ identisch oder unterschiedlich sind,
**dadurch gekennzeichnet, daß** wenigstens ein $\alpha,\omega$-Bis(alkylphosphino)-alkan durch Elektrolyse in Fluorwasserstoff zu wenigstens einer Verbindung der allgemeinen Formel (I) umgesetzt und diese gegebenenfalls gereinigt und/oder isoliert wird.

**8.** Verfahren gemäß Anspruch 7, **dadurch gekennzeichnet, daß** wenigstens eine Verbindung der allgemeinen Formel (II),

$$(C_aH_{2a+1})_bP(R^1)_{2-b}(CH_2)_cP(R^1)_{2-b}(C_aH_{2a+1})_b$$

(II)

worin

$R^1$ = H, Cl oder F,
$1 \le a \le 8$,
b = 0, 1 oder 2 und
$1 \le c \le 12$ sind,

und/oder wenigstens eine Verbindung der allgemeinen Formel (III),

$$(C_aH_{2a+1})_bP(R^2)_{4-b}(CH_2)_cP(R^2)_{4-b}(C_aH_{2a+1})_b$$

(III)

worin

$R^2$ = Cl oder F,
$1 \le a \le 8$,
b = 0, 1 oder 2 und
$1 \le c \le 12$ sind,

wobei jeweils die Liganden $(C_aH_{2a+1})$, $R^1$ und $R^2$ der Verbindungen (II) und/oder (III) identisch oder unterschiedlich sind,
durch Elektrolyse in Fluorwasserstoff zu einer Verbindung der allgemeinen Formel (I) umgesetzt und diese gegebenenfalls gereinigt und/oder isoliert wird.

**9.** Verfahren gemäß Anspruch 7 oder 8, **dadurch gekennzeichnet, daß** die Elektrolyse bei einer Temperatur von -20 bis +40 °C, besonders bevorzugt bei -10 bis +10 °C und ganz besonders bevorzugt bei -5 bis +5 °C durchgeführt wird.

**10.** Verfahren gemäß einem der Ansprüche 7 bis 9. **dadurch gekennzeichnet, daß** die Elektrolyse bei einem Überdruck von 0 bis 3 bar über Normaldruck, besonders bevorzugt von 0,1 bis 1,5 bar über Normaldruck und ganz besonders bevorzugt bei Normaldruck durchgeführt wird.

**11.** Verfahren gemäß einem der Ansprüche 7 bis 10, **dadurch gekennzeichnet, daß** die Elektrolyse bei einer Spannung von 4 bis 8 Volt, vorzugsweise bei 4,5 - 7,5 Volt durchgeführt wird.

**12.** Verfahren gemäß einem der Ansprüche 7 bis 11, **dadurch gekennzeichnet, daß** die Elektrolyse bei einer Stromdichte von 0,2 bis 5 $A/dm^2$, vorzugsweise bei 0,2 bis 4 $A/dm^2$, besonders bevorzugt bei 0,5 bis 2,5 $A/dm^2$ durchgeführt wird.

**13.** Verfahren gemäß einem der Ansprüche 7 bis 12, **dadurch gekennzeichnet, daß** die Verbindung der allgemeinen Formel (I) durch Extraktion, Phasentrennung, Destillation oder durch ein Kombination dieser Methoden gereinigt und/oder isoliert wird.

**14.** Verfahren gemäß einem der Ansprüche 7 bis 13, **dadurch gekennzeichnet, daß** zur Elektrolyse eine Anode eingesetzt wird, die auf Nickel basiert.

**15.** Verbindungen die unter Verwendung von wenigstens einer Verbindung der allgemeinen Formel (I) als Zwischenprodukt erhalten werden.

Europäisches Patentamt

# EUROPÄISCHER RECHERCHENBERICHT

Nummer der Anmeldung
EP 02 00 2734

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KAMPA J.J. ET AL.: "Solution phase direct fluorination of bridged alkyl di- and triphosphines" JOURNAL OF FLUORINE CHEMISTRY., Bd. 102, Nr. 1-2, - März 2000 (2000-03) Seiten 333-335, XP002198325 ELSEVIER SEQUOIA. LAUSANNE., CH ISSN: 0022-1139 * das ganze Dokument * | 1-15 | C07F9/535 C25B3/08 |
| X | ALTHOFF W. ET AL.: "Darstellung und kernresonanzspektroskopische Untersuchung von Alkylen/Alkylidenbis(phosphonsäuredihalogeniden) und -bis(fluorphosphoranen)" CHEMISCHE BERICHTE., Bd. 114, Nr. 3, 1981, Seiten 1082-1090, XP002198326 VERLAG CHEMIE GMBH. WEINHEIM., DE ISSN: 0009-2940 * das ganze Dokument * | 1-15 | |
| A | KAMPA J.J. ET AL.: "The synthesis of tris(perfluoroalkyl)phosphanes" ANGEWANDTE CHEMIE. INTERNATIONAL EDITION., Bd. 34, Nr. 11, - 16. Juni 1995 (1995-06-16) Seiten 1241-1244, XP002198327 VERLAG CHEMIE. WEINHEIM., DE ISSN: 0570-0833 * das ganze Dokument * | 1-15 | RECHERCHIERTE SACHGEBIETE (Int.Cl.7) C07F C25B |
| D,A | WO 00 21969 A (MERCK PATENT GMBH) 20. April 2000 (2000-04-20) * das ganze Dokument * | 1-15 | |

Der vorliegende Recherchenbericht wurde für alle Patentansprüche erstellt

| Recherchenort | Abschlußdatum der Recherche | Prüfer |
|---|---|---|
| DEN HAAG | 8. Mai 2002 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 02 00 2734

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2002

| Im Recherchenbericht angeführtes Patentdokument | Datum der Veröffentlichung | Mitglied(er) der Patentfamilie | Datum der Veröffentlichung |
|---|---|---|---|
| WO 0021969 A | 20-04-2000 | DE 19846636 A1 | 13-04-2000 |
| | | AU 6330199 A | 01-05-2000 |
| | | BR 9906864 A | 17-10-2000 |
| | | CA 2313319 A1 | 20-04-2000 |
| | | CN 1287557 T | 14-03-2001 |
| | | WO 0021969 A1 | 20-04-2000 |
| | | EP 1037896 A1 | 27-09-2000 |
| | | US 6264818 B1 | 24-07-2001 |

EPO FORM P0461

Für nähere Einzelheiten zu diesem Anhang : siehe Amtsblatt des Europäischen Patentamts, Nr.12/82